(19) Europäisches Patentamt
European Patent Office
Office européen des brevets

(11) **EP 2 549 565 A1**

(12) **EUROPEAN PATENT APPLICATION**
published in accordance with Art. 153(4) EPC

(43) Date of publication:
**23.01.2013 Bulletin 2013/04**

(51) Int Cl.:
***H01M 2/16*** (2006.01)        ***C08J 9/00*** (2006.01)
***H01M 10/0566*** (2010.01)

(21) Application number: **11756275.1**

(22) Date of filing: **15.03.2011**

(86) International application number:
**PCT/JP2011/056004**

(87) International publication number:
**WO 2011/115090 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2010  JP 2010062056**

(71) Applicant: **Mitsubishi Plastics, Inc.
Tokyo 100-8252 (JP)**

(72) Inventors:
• **YAMAMOTO, Miho**
  **Nagahama-shi**
  **Shiga 526-8660 (JP)**

• **YAMADA, Takeyoshi**
  **Nagahama-shi**
  **Shiga 526-8660 (JP)**
• **USAMI, Yasushi**
  **Nagahama-shi**
  **Shiga 526-8660 (JP)**

(74) Representative: **Gille Hrabal
Patentanwälte
Brucknerstrasse 20
40593 Düsseldorf (DE)**

(54) **POROUS POLYPROPYLENE RESIN FILM, SEPARATOR FOR USE IN A BATTERY, AND BATTERY**

(57) As a porous film in which the air-permeability at the time of elongation of the porous film was adjusted, whereby, when used as a battery separator, the holes of a separator in an electrode/separator wound body have been controlled, a polypropylene series resin porous film is proposed, in which, for a porous film having a polypropylene series resin as the main component, regarding air-permeability (Pa) prior to elongation and air-permeability (Pa') at 5% elongation, (1) Pa' is 1,000 seconds/100 ml or less and (2) Pa'/Pa is 1.5 or less.

[Fig.1]

EP 2 549 565 A1

**Description**

[Technical field]

The present invention relates to a porous film having a polypropylene series resin as the main component. Specifically, it relates to a porous film that can be used in, for instance, various separatory membranes employed for packaging use, sanitary use, animal industry use, agricultural use, architectural use or medical use, or, as a light diffuser plate, a battery separator or the like. Among them, it relates to a porous film that can be used suitably as a separator for a non-aqueous electrolyte battery.

[Background art]

Polymer porous films, which have multiple microscopic continuous holes, are being used in various fields, as separatory membranes used in the preparation of ultra pure water, the purification of drug solution, water treatment or the like, as waterproof moisture-permeable films used in clothing/hygiene materials and the like, or, as battery separators, or the like, used in batteries, or the like.
Secondary batteries are widely used as power sources of portable devices such as for OA (office automation), FA (factory automation), household appliances, communication devices or the like. Among them, the use of lithium ion secondary batteries in portable devices is rising sharply, from the fact that, when a device is equipped therewith, the volume efficiency becomes high, leading to a decrease in the size and weight of the device. In addition, since lithium ion secondary batteries, being one type of non-aqueous electrolyte secondary battery, are excellent on the points of large capacity, high output, high voltage and long-term conservation ability, research and development for use as large secondary batteries are proceeding in a number of fields related to energy and environmental problems, beginning with load leveling, UPS (uninterruptible power supply) and electric cars.
The working voltage of a lithium ion secondary battery, in general, is designed with 4.1 V to 4.2 V as the upper limit. At such high voltages, aqueous solutions give rise to electrolysis and thus cannot be used as electrolytic solutions. Therefore, a non-aqueous electrolytic solution, in which an organic solvent has been used, is used as electrolytic solution that can withstand even high voltages. High-permittivity organic solvents, which allow more lithium ions to be present, are used as solvents for such non-aqueous electrolytic solutions, and for instance, organic carbon acid ester compounds, such as propylene carbonate and ethylene carbonate, are mainly used.
As supporting electrolyte that becomes a source of lithium ions in the solvent, an electrolyte with a high reactivity such as lithium hexafluorophosphate is dissolved in the solvent and used.
In a lithium ion secondary battery, from the point of preventing an internal short circuit, a separator is intercalated between the positive electrode and the negative electrode. The separator, in addition to being required from the role thereof to have insulation property and permeability to air, which becomes the passage of lithium ions, is required to be of a microporous structure for the purpose of conferring electrolytic solution diffusion/retention function. In order to meet these requirements, porous films are used as separators.
In recent years, along with the capacity-increase in lithium ion secondary batteries, research and development regarding separators are proceeding in the direction of membrane thinning, large pore sizes, low resistance and high porosity. For example, in Japanese Patent Application Laid-open No. 2008-248231 (Patent Reference 1), Japanese Patent Application Laid-open No. 2000-30683 (Patent Reference 2), or the like, separators with high porosity have been described.

[Prior art references]

[Patent References]

[Patent Reference 1] Japanese Patent Application Laid-open No. 2008-248231
[Patent Reference 2] Japanese Patent Application Laid-open No. 2000-30683

[Summary of the invention]

[Problems to be solved by the invention]

For a conventional secondary battery, a wound body is created by overlaying positive and negative electrodes and two separators, which is introduced into a metal tube and sealed to be assembled as a battery.

Separators described in prior art are causes that provoke deterioration of battery performance, such as, if winding is performed at high-speed to improve productivity in the winding process for creating the wound body, since a large tension is exerted on the separators, holes are deformed, which becomes a cause for clogging. This problem is an important problem to be solved particularly in high-porosity porous films, since they are readily deformed by an external force.

Therefore, an object of the present invention is to provide a novel porous film which retains sufficient continuity even if tension is exerted.

[Means to solve the problems]

The present invention proposes a polypropylene series resin porous film fulfilling the following conditions (1) and (2) regarding air-permeability (Pa) prior to elongation, and air-permeability (Pa') at 5% elongation:

(1) Pa' is 1,000 seconds/100 ml or less
(2) Pa'/Pa is 1.5 or less

[Effects of the invention]

Since the polypropylene series resin porous film proposed by the present invention is provided with a property that allows sufficient continuity to be retained even if tension is exerted, for instance, when the porous film is used as a battery separator, deterioration of battery properties can be prevented, such as clogging, even if winding in the winding process is performed at high speed.

[Brief description of the drawings]

[Fig. 1]

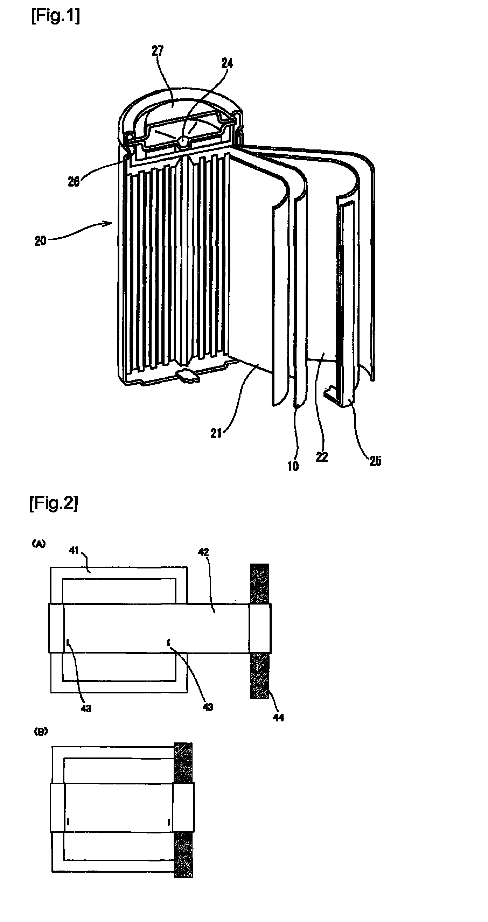

Fig.1 is a partially exploded perspective view showing an example of battery containing a porous polypropylene film according to an example of the present invention.
[Fig. 2]
Fig.2 is a view for the purpose of describing a method for immobilizing a porous polypropylene film in an air-permeability measurement at 5% elongation.
[Fig. 3]

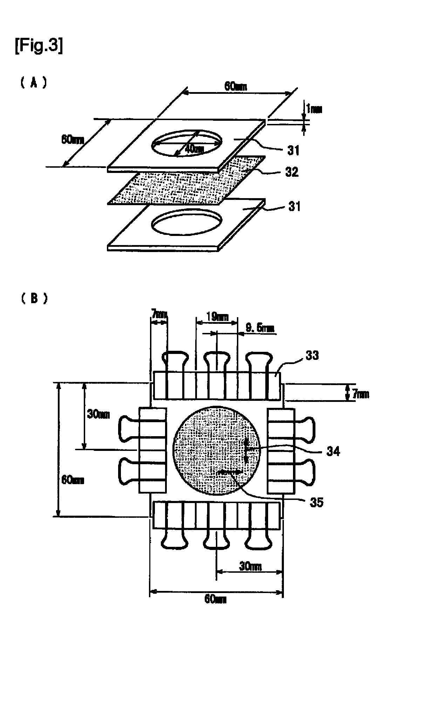

Fig.3 is a view for the purpose of describing a method for immobilizing a porous polypropylene film in an X-ray diffraction measurement.

[Modes for carrying out the invention]

Hereafter, a polypropylene series resin porous film serving as an example of mode for carrying out the present invention will be described (hereafter referred to as "the present porous film").

<Air-permeability>

For the air-permeability (Pa) of the present porous film, that is to say, air-permeability (Pa) prior to elongation, 1,000 seconds/100 ml or less is desirable, in particular 10 seconds/100 ml or greater or 900 seconds/100 ml or less is more desirable, of which, in particular, 50 seconds/100 ml or greater or 800 seconds/100 ml or less is further desirable. If the air-permeability Pa is 1,000 seconds/100 ml or less, the presence of sufficient continuity in the present porous film is indicated, and excellent air-permeating capability can be demonstrated, which is thus desirable.
Air-permeability represents the difficulty for air to pass through in the film-thickness direction, and is expressed concretely with a numerical value necessary for 100 ml of air to pass through the film. Therefore, a smaller numerical value means that the through-passage is facilitated, and a larger numerical value means that the through-passage is difficult. In other words, when this numerical value is smaller, the meaning is that continuity in the thickness direction of the film is satisfactory, and when this numerical value is larger, the meaning is that continuity in the thickness direction of the film is poor. Continuity is the extent of connection of the pores in the film-thickness direction.
If air-permeability of the present porous film is low, the film can be used in a variety of applications. For instance, when using the film as a battery separator, low air-permeability means that the movement of lithium ions, which are the electric charges, is facilitated and battery performance is excellent, which is thus desirable.
As methods for bringing air-permeability (Pa) of the present porous film to 1,000 seconds/100 ml or less, measures such as using a polypropylene series resin having β-crystal activity or controlling production conditions such as extrusion-molding conditions and stretching conditions can be cited as one example.

In the present porous film, it is important that air-permeability (Pa') at 5% elongation is 1,000 seconds/100 ml or less, preferably 900 seconds/100 ml or less and more preferably 800 seconds/100 ml or less.

The fact that the film has sufficient continuity is indicated by the fact that the Pa' is 1,000 seconds/100 ml or less. For instance, when the film is used as a battery separator, hole clogging due to deposition of ions, which are charges, can be suppressed.

Meanwhile, there is no particular limitation regarding the lower limit of the air-permeability Pa'. It is preferably 10 seconds/100 ml or greater, and in particular 50 seconds/100 ml or greater is more desirable.

The air-permeability at 5% elongation is a value measured by the methods described in the examples.

As measures for bringing the air-permeability Pa' to 1,000 seconds/100 ml or less, the following methods (i) to (iii) can be cited:

(i) Measure of turning the film into a porous film that is hard to deform even if pulled.
(ii) Measure of turning the film into a porous film in which, despite being deformed by pulling, there is no influence on the continuity of the porous structure.
(iii) Measure of turning the film into a porous film that can secure sufficient continuous holes even after deformation under elongation.

As for the measure of (i) above, realization is possible by adjusting the combination of raw materials, stretching conditions or the like, in order to decrease porosity or enlarge the modulus of elasticity in tension.

As for the measure of (ii) above, realization is possible by rendering the shape of the holes isotropic, thereby preventing pores from being blocked by deformation under elongation.

As for the measure of (iii) above, realization is possible by enlarging the pore size, enlarging porosity, selection of pore-opening method or controlling the porous structure. In this way, sufficient continuous holes can be secured even if continuity of the porous structure due to deformation under elongation deteriorates.

(Pa'/Pa)

Regarding the present porous film, it is important that Pa'/Pa is 1.5 or less, 1.4 or less being desirable and 1.3 or less being more desirable. Meanwhile, there is no particular limitation regarding the lower limit. 0.8 or greater is desirable, and particularly 0.9 or greater is further desirable.

If the Pa'/Pa is 1.5 or less, decrease in physical properties due to deformation of the porous structure of the present porous film can be suppressed sufficiently even in a state where tension is exerted on the present porous film such as when winding the present porous film into a roll-shape. Suppressing a decrease in physical properties due to deformation of the porous structure allows sufficient air-permeability and porosity to be secured when using the present porous film in a secondary application. For instance, upon using the present porous film as a battery separator, when fabricating a non-aqueous electrolytic solution battery using a wound object in which electrodes and battery separators have been overlaid and wound, the non-aqueous electrolytic solution battery fabricated using the present porous film allows a non-aqueous electrolytic solution battery to be obtained, demonstrating satisfactory film electric resistance, suppressing deterioration of battery properties such as clogging and usable over a long time period.

<Porosity>

In the present porous film, porosity is preferably 30% or greater, and 40% or greater is more desirable. If the porosity is 30% or greater, a layered porous film which secures continuity while having excellent air-permeating properties can be obtained. Meanwhile, there is not particular limitation regarding the upper limit. 90% or less is desirable, and in particular 80% or less is further desirable.

If porosity is 90% or less, a decrease in the strength of the present porous film is unlikely to occur, which is desirable also from the point of view of secondary processability.

The porosity can be measured by the methods mentioned in the examples described below.

<Modulus of elasticity in tension>

In the present porous film, it is desirable that the modulus of elasticity in tension at 3% elongation is 350 MPa or greater, and 400 MPa or greater is more desirable.

If the modulus of elasticity in tension at 3% elongation is 350 MPa or greater, hole deformation of the present porous film can be suppressed all the more sufficiently when winding the present porous film into a roll-shape. Thus, sufficient air-permeability and porosity can be secured when using the present porous film in a secondary application. For instance, when using the present porous film as a battery separator, the fabricated non-aqueous electrolytic solution battery can suppress clogging of holes in the battery separator or deterioration of battery properties due to deposition of ions.

Meanwhile, there is no particular limitation regarding the upper limit. Preferably, from the points of view of flexibility and secondary processability, 2,000 MPa or lower is desirable, in particular 1500 MPa or lower is more desirable, of which 1,000 MPa or lower is further desirable.

The modulus of elasticity in tension at 3% elongation is a value measured by the methods described in the examples.

<Thickness>

For the film-thickness of the present porous film, 5 $\mu$m to 100 $\mu$m is desirable, of which 8 $\mu$m or greater or 50 $\mu$m or less, whereof 10 $\mu$m or greater or 30 $\mu$m or less, is further desirable.

When used as a battery separator, if the film-thickness of the present porous film is 5 $\mu$m or greater, substantially necessary electric insulation can be obtained, and for instance, even when a large force is applied to a protruding portion of an electrode, short-circuiting by piercing the battery separator can be prevented, which allows it to have excellent safety. In addition, if the film-thickness is 100 $\mu$m or less, since the electric resistance of the layered porous film can be reduced, the capabilities of the battery can be secured sufficiently.

<$\beta$-crystal activity>

It is desirable that the present porous film has $\beta$-crystal activity.

$\beta$-crystal activity can be considered as an indicator showing that a polypropylene series resin had generated a $\beta$-crystal in a film-shaped object prior to stretching. If the polypropylene series resin within the film-shaped object prior to stretching had generated a $\beta$-crystal, since micropores can be formed readily by performing stretching even when no additive such as a filler is used, a polypropylene series resin porous film having air-permeating property can be obtained.

Regarding the assessment of the presence or absence of "$\beta$-crystal activity", if a crystal-melting peak temperature derived from a $\beta$-crystal is detected by a differential scanning calorimeter, described below, or, if a diffraction peak derived from a $\beta$-crystal is detected by a measurement using an X-ray diffractometer, described below, the film can be assessed as having "$\beta$-crystal activity".

Concretely, with a differential scanning calorimeter, when the present porous film is raised in temperature from 25°C to 240°C at a heating rate of 10°C/minute, then, retained for one minute, next, lowered in temperature from 240°C to 25°C at a cooling rate of 10°C/minute, then, retained for one minute, and further, raised in temperature again from 25°C to 240°C at a heating rate of 10°C/minute, if a crystal-melting peak temperature (Tm$\beta$) derived from a $\beta$-crystal of the polypropylene series resin is detected, the film can be assessed as having "$\beta$-crystal activity".

The degree of $\beta$-crystal activity of the present porous film is a value calculated using the crystalline melting heat derived from the $\alpha$-crystals ($\Delta$Hm$\alpha$) and the crystalline melting heat derived from the $\beta$-crystals ($\Delta$Hm$\beta$) of the polypropylene resin to be detected, by the following formula:

$$\text{Degree of } \beta\text{-crystal activity (\%)} = [\Delta Hm\beta/(\Delta Hm\beta + \Delta Hm\alpha)] \times 100$$

For instance, when the polypropylene series resin is homopolypropylene, the degree of $\beta$-crystal activity can be calculated from the crystalline melting heat derived from the $\beta$-crystals ($\Delta$Hm$\beta$) detected mainly in a range of 145°C or higher but less than 160°C and the crystalline melting heat derived from the $\alpha$-crystals ($\Delta$Hm$\alpha$) detected mainly in a range of 160°C or higher but 170°C or lower. In addition, for instance in the case of a random polypropylene in which ethylene is copolymerized at 1 to 4% by mole, the degree of $\beta$ activity can be calculated from the crystalline melting heat derived from the $\beta$-crystals ($\Delta$Hm$\beta$) detected mainly in a range of 120°C or higher but less than 140°C and the crystalline melting heat derived from the $\alpha$-crystals ($\Delta$Hm$\alpha$) detected mainly in a range of 140°C or higher but 165°C or lower.

It is desirable that the degree of $\beta$-crystal activity of the present porous film is larger, and it is desirable that the degree of $\beta$-crystal activity is 20% or greater. More desirable is 40% or greater, and particularly desirable is 60% or greater. If the present porous film has a degree of $\beta$-crystal activity of 20% or greater, $\beta$-crystals of polypropylene series resin can be generated abundantly also within the film-shaped object prior to stretching, fine and uniform pores are formed in large numbers by stretching, and as a result, the film can be turned into a lithium ion battery separator with high mechanical strength and excellent air-permeating capability.

The upper limit value of the degree of $\beta$-crystal activity is not limited in particular. Since the higher the degree of $\beta$-crystal activity, the more effectively the effects are obtained, the closer to 100% is more desirable.

The presence or absence of 13 activity can be assessed also with a diffraction profile obtained by wide-angle X-ray diffraction measurement of a polypropylene series resin porous film that was subjected to a specific heat-treatment. In detail, for a polypropylene series resin porous film subjected to heat-treatment at 170°C to 190°C, which are temperatures exceeding the melting point of the polypropylene series resin, and slowly cooled to generate/grow β-crystals, if a wide-angle X-ray measurement is carried out and a diffraction peak derived from the (300) plane of the β-crystals of the polypropylene series resin is detected in a range of 29 = 16.0° to 16.5°, it can be assessed that there is β activity.

Regarding the β-crystal structure of a polypropylene series resin and wide-angle X-ray diffractometry, Macromol. Chem. 187, 643-652 (1986), Prog. Polym. Sci. Vol. 16, 361-404 (1991), Macromol. Symp. 89, 499-511 (1995), Macromol. Chem. 75, 134 (1964), and references cited therein can be referred. Regarding detailed evaluation methods for β-crystal activity using wide-angle X-ray diffractometry, the methods will be indicated in the examples described later.

Whether the present porous film has a monolayer structure or other porous layers are layered, the β-crystal activity can be measured in a state comprised of all layers of polypropylene series resin porous film, in both cases. Hypothetically, when a layer containing a polypropylene series resin, or the like, is layered in addition to a layer comprising a polypropylene series resin, it is desirable that both layers have β-crystal activity.

As methods for obtaining β-crystal activity, the method of adding a polypropylene treated so as to generate radical peroxides and the method of adding a β-crystal nucleating agent to the composition, as described in Japanese Patent No. 3739481, and the like, may be cited.

<Layer constitution of the present porous film>

Whether the present porous film is a monolayer or layered does not matter. Layering two layers or more is desirable.

The layer constitution of the present porous film is not limited in particular as long as at least one layer containing polypropylene series resin (hereinafter referred to "A layer") is present. In addition, another layer (hereinafter referred to "B layer") can be also layered to an extent that does not impede the functions of the present porous film.
As the B layer, for instance, strength retention layer, heat-resistant layer (high melting temperature resin layer), shutdown layer (low melting temperature resin layer), and the like, may be cited. For instance, when using as a battery separator, it is desirable that a low melting resin layer is layered onto the A layer that shuts the pores at high temperature atmosphere and secures battery safety, such as described in Japanese Patent Application Laid-open No. H04-181651.

Concretely, two-layer structures in which A layer/B layer have been layered, three-layer structure in which A layer/B layer/A layer have been layered, and the like, can be given as examples. In addition, in combination with a layer having another function, such a morphology as three-species, three layers is also possible. In this case, while the layering order with the layer having another function does not matter in particular, it is more desirable that the outer layer of the present porous film is the A layer. Further, as necessary, as the number of layers, 4 layers, 5 layers, 6 layers and 7 layers are adequate.

The physical properties of the present porous film are suitably adjustable by the layer constitution or the layer ratio, the composition of each layer, and the production method.

<Components of the A layer

The A layer described above can be fabricated for instance by extrusion-molding a resin composition containing a polypropylene series resin and a β-crystal nucleating agent to produce a pore-free film-shaped object, and performing a predetermined stretching.
Thus, polypropylene series resin and β-crystal nucleating agent will be described here.
However, the production method of the A layer mentioned above is absolutely illustrative, and production methods of the A layer are not limited to this production method.

(Polypropylene series resin)

As polypropylene series resin, for instance, homopropylene (propylene homopolymer), or, random copolymer or block copolymer of propylene and an α-olefin such as ethylene, 1-butene, 1-pentene, 1-hexene, 1-heptene, 1-octene, 1-nonene or 1-decene, and the like, may be cited. Among these, homopolypropylene is more suitable from the point of view of maintaining mechanical strength, heat resistance, and the like, of the polypropylene series resin porous film.

As polypropylene series resin, it is desirable that the isotactic pentad fraction (mmmm fraction), which indicates stereoregularity, is 80 to 99%. More preferably, the isotactic pentad fraction is 83 to 98%, and even more preferably 85 to 97%. If the isotactic pentad fraction is too low, there is the risk that the mechanical strength of the film decreases. Meanwhile, regarding the upper limit of the isotactic pentad fraction, it is governed by the upper limit value obtained industrially at the current time point. Regarding when a resin with higher regularity is developed at the industry level in the future, there is no limitation to the upper limit value.

The isotactic pentad fraction (mmmm fraction) means the proportion of tertiary structure in which five methyl groups, which are side chains, are all located in the same direction with respect to a main chain of carbon-carbon bonds constituted by five arbitrary successive propylene units.

Attribution of a signal in the methyl group region is determined according to A. Zambelli et al (Macromolecules 8, 687, (1975)).

As polypropylene series resin, it is desirable that Mw/Mn, which is a parameter indicating the molecular weight distribution, is 2.0 to 10.0. More preferably, the Mw/Mn is 2.0 to 8.0, and even more preferably 2.0 to 6.0. The fact that the Mw/Mn is small means that the molecular weight distribution is narrow. If Mw/Mn is less than 2.0, in addition to problems arising, such as extrusion-molding ability decreases, industrial production becomes also difficult. Meanwhile, if Mw/Mn exceeds 10.0, there are more low molecular weight constituents and the mechanical strength of the present porous film is prone to decrease.

The Mw/Mn is a value that is measured by the GPC (gel permeation chromatography) method.

The melt flow rate (MFR) of the polypropylene series resin is not limited in particular. In general, it is desirable that the MFR is 0.5 to 15 g/10 minutes, and 1.0 to 10 g/10 minutes is more desirable. With MFR set at 0.5 g/10 minutes or greater, the molten viscosity of the resin during the forming process is high, allowing sufficient productivity to be secured. Meanwhile, set at 15 g/10 minutes or lower, the mechanical strength of the obtained polypropylene series resin porous film can be retained sufficiently.

The MFR is a value measured according to JIS K721 0, under the conditions: 230°C temperature and 2.16 kg load.

Production methods for the polypropylene series resin are not limited in particular. Well-known polymerization methods using well-known polymerization catalysts, for instance, polymerization methods using multi-site catalysts represented by Ziegler-Natta type catalysts, and single-site catalysts represented by metallocene series catalysts, and the like, may be cited.

It is possible to use commercially available products as polypropylene series resins, such as, for instance, product names "NOVATEC PP" and "WINTEC" (manufactured by Japan Polypropylene Corporation), "VERSIFY", "NOTIO" and "TAFMER XR" (manufactured by Mitsui Chemicals Inc.), "ZELAS" and "THERMORUN" (manufactured by Mitsubishi Chemical Corporation), "Sumitomo NOBRENE" and "TAFCELENE" (manufactured by Sumitomo Chemical Co., Ltd.), "Prime TPO" (manufactured by Prime Polymer Co., Ltd.), "Adflex", "Adsyl" and "HMS-PP (PF814)" (manufactured by SunAllomer Ltd.), and "Inspire" (Dow Chemical).

($\beta$-crystal nucleating agent)

As $\beta$-crystal nucleating agents used in the present porous film, those that increase the generation/growth of $\beta$-crystals of polypropylene series resin can be used suitably, and using one species alone or using two or more species in combination is possible.

As $\beta$-crystal nucleating agents, for instance, amide compounds; tetraoxaspiro compound; quinacridones; iron oxides having nano-scale size; alkaline or alkaline earth metal salts of carboxylic acids represented by potassium 1,2-hydroxystearate, magnesium benzoate or magnesium succinate, magnesium phthalate and the like; aromatic sulfonic acid compounds represented by sodium benzenesulfonate or sodium naphthalenesulfonate and the like; di- or triesters of di- or tribasic carboxylic acids; phthalocyanine series pigments represented by phthalocyanine blue and the like; binary series compounds comprising a constituent A that is an organic dibasic acid and a constituent B that is an oxide, a hydroxide or a salt of a Group IIA metal from the periodic table; compositions comprising a cyclic phosphorous compound and a magnesium compound, and the like, may be cited.

In addition, Japanese Patent Application Laid-open No. 2003-306585, Japanese Patent Application Laid-open No. H06-289566, and Japanese Patent Application Laid-open No. H09-194650 give descriptions regarding concrete species of nucleating agent.

As commercial products of $\beta$-crystal nucleating agent, for instance, $\alpha$-crystal nucleating agent "NJSTAR NU-100" manufactured by New Japan Chemical Co., Ltd., and as concrete examples of polypropylene series resins added with a $\beta$-crystal nucleating agent, polypropylene "Bepol B-022SP" manufactured by Aristech, polypropylene "Beta ($\beta$)-PP BE60-7032" manufactured by Borealis, polypropylene "BNX BETAPP-LN" manufactured by Mayzo, and the like, may be cited.

It is desirable to adjust the proportion of $\beta$-crystal nucleating agent to be added to the polypropylene series resin suitably according to the species of the $\beta$-crystal nucleating agent or the composition of the polypropylene series resin, and the like. From such points of view, it is desirable that the proportion of $\beta$-crystal nucleating agent is 0.0001 to 5.0 parts by mass with respect to 100 parts by mass of polypropylene series resin. More desirable is 0.001 to 3.0 parts by mass, and further desirable is 0.01 to 1.0 parts by mass. If 0.0001 parts by mass or greater, $\beta$-crystals of polypropylene series resin can be generated/grown sufficiently during production, also when used as a battery separator, sufficient $\beta$-crystal activity can be secured, and the desired air-permeating capability is obtained. Further, if the addition is 5.0 parts by mass or less, it is not only economically advantageous, there is also no bleeding or the like of the β-crystal nucleating agent onto the polypropylene series resin porous film surface, which is desirable.

In addition, hypothetically, when a layer containing a polypropylene series resin, or the like, is layered in addition to a layer comprising a polypropylene series resin, the amounts of β-crystal nucleating agent added in each of the layers may be identical or may be different. The porous structure of each layer can be adjusted suitably by changing the amounts of β-crystal nucleating agent added.

(Other constituents)

In the present porous film, aside from the constituents described above, additives mixed conventionally into a resin composition can be added suitably, within ranges that do not noticeably inhibit the effects of the present invention. As the additives mentioned above, additives that are added for the purpose of improving/adjusting forming processability, productivity and other various physical properties may be cited, such as, for instance, recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants.

Concretely, oxidation inhibitors described in P154 to P158 of "Plastics Compounding Agents", ultraviolet light absorbent described in P178 to P182, surfactant serving as anti-static agent described in P271 to P275, lubricant described in P283 to P294 and the like, may be cited.

<Components of the B layer>

The B layer described above can be fabricated for instance by extrusion-molding a resin composition containing a polyethylene series resin and a porositization-promoting compound to produce a pore-free film-shaped object, and performing a predetermined stretching.

Thus, a polyethylene series resin and a porositization-promoting compound will be described here.

However, the production method of the B layer mentioned above is absolutely illustrative, and production methods of the B layer are not limited to this production method.

(Polyethylene series resin)

As polyethylene series resins, not only homopolymeric polyethylenes such as, for instance, ultra-low density polyethylenes, low density polyethylenes, high density polyethylenes, linear low density polyethylenes, furthermore, ultra-high molecular weight polyethylenes having characteristics in the molecular weight, but also ethylene propylene copolymers, or co-polymer polyethylenes of a polyethylene series resin and another polypropylene series resin, can be cited. Among these, homopolymeric polyethylenes or co-polymer polyethylenes in which the amount of α-olefin co-monomer is 2% by mole or less is desirable, and homopolymeric polyethylenes are further desirable. There is no particular limitation regarding the species of α-olefin co-monomer.

It is desirable that the density of the polyethylene series resin is 0.910 to 0.970 $g/cm^3$, of which 0.930 to 0.970 $g/cm^3$ is all the more desirable, and of this, 0.940 to 0.970 $g/cm^3$ is further desirable. If the density is 0.910 $g/cm^3$ or greater, the layer can have a suitable degree of SD characteristics, which is desirable. Meanwhile, if 0.970 $g/cm^3$ or lower, it is desirable, aside from allowing the layer to have a suitable degree of SD characteristics, on the point that stretchability is maintained.

The density of the polyethylene series resin can be measured according to JIS K7112 using the density gradient tube method.

The melt flow rate (MFR) of the polyethylene series resin is not limited in particular. In general, MFR is preferably 0.03 to 30 g/10 minutes, of which 0.3 to 10 g/10 minutes is more desirable. If MFR is 0.03 g/10 minutes or greater, as the molten viscosity of the resin during forming process is sufficiently low, productivity is excellent, which is desirable. Meanwhile, if 30 g/10 minutes or lower, as sufficient mechanical strength can be obtained, it is desirable.

MFR can be measured according to JIS K7210 with the conditions: 190°C temperature and 2.16 kg load.

There is no particular limitation on the polymerization catalysts used in the polymerization of polyethylene series resin. Any is adequate, for instance, Ziegler type catalyst, Philips type catalyst, and Kaminsky type catalyst or the like.

As polymerization methods for the polyethylene series resin, there is one-step polymerization, two-step polymerization, or greater multi-step polymerization, and polyethylene series resins from any methods can be used.

(Porositization-promoting compound)

Adding a porositization-promoting compound to the polyethylene series resin is desirable. By adding the porositization-promoting compound, porous structures can be obtained more effectively, and controlling pore shapes and pore sizes is facilitated.

The porositization-promoting compound is not to be limited in particular. Illustrating concretely, it is desirable that at least one species among the porositization-promoting compounds chosen from modified polyolefin resins, alicyclic saturated hydrocarbon resins or modified bodies thereof, ethylene series copolymers or waxes, is contained. Among them, alicyclic saturated hydrocarbon resins or modified bodies thereof, ethylene series copolymers or waxes, which allow all the more effects to be obtained regarding porositization, are more desirable, and waxes are further desirable from the point of view of molding ability.

Regarding alicyclic saturated hydrocarbon resins and modified bodies thereof, petroleum resins, rosin resins, terpene resins, coumarone resins, indene resins, coumarone-indene resins, and modified bodies thereof, and the like, may be cited.

The petroleum resins mentioned above include aliphatic series, aromatic series and copolymer series petroleum resins obtained by homo- or copolymerizing one species or two or more species of compounds, which are aliphatic olefins and diolefins in C4 to C10, aromatic compounds in C8 or greater having an olefinic unsaturated bond obtained from byproducts due to pyrolysis and the like of naphtha, and included among them.

As petroleum resins, there are, for instance, aliphatic series petroleum resins having the C5 fraction as the main raw material, aromatic series petroleum resins having the C9 fraction as the main raw material, copolymer series petroleum resins thereof and alicyclic series petroleum resins. As terpene resins, terpene resins and terpene-phenol resins from β-pinene, and in addition, as rosin resins such as gum rosin and wood rosin, esterified rosin resins, which have been modified with glycerin or pentaerythritol, and the like, can be indicated as examples.

While alicyclic saturated hydrocarbon resins and modified bodies thereof demonstrate satisfactory compatibility when mixed in a polyethylene series resin, from the aspects of color tone and thermostability, petroleum resins are more desirable, and using hydrogenated petroleum resins is further desirable.

The hydrogenated petroleum resins are those obtained by hydrogenating petroleum resins by commonly used methods. For instance, hydrogenated aliphatic series petroleum resins, hydrogenated aromatic series petroleum resins, hydrogenated copolymer series petroleum resins and hydrogenated alicyclic series petroleum resins, as well as hydrogenated terpene series resins, can be cited.

Among the hydrogenated petroleum resins, hydrogenated alicyclic series petroleum resins comprising cyclopentadiene series compound and aromatic vinyl series compound that have been copolymerized and hydrogenated are particularly desirable.

As commercially available hydrogenated petroleum resins, "ARKON" (manufactured by Arakawa Chemical Industries, Ltd.), and the like, may be cited.

In the above description, the ethylene series copolymers given as porositization-promoting compound examples are compounds obtained by copolymerizing ethylene and one species or more among vinyl acetate, unsaturated carboxylic acid, unsaturated carboxylic acid anhydride or carboxylate ester, and the like.

For the ethylenic copolymer, the content percentage of ethylene monomer unit is preferably 50% by mass or greater, more preferably 60% by mass or greater, and further preferably 65% by mass or greater. Meanwhile, regarding the upper limit, it is desirable that the content percentage of the ethylene monomer unit is preferably 95% by mass or less, more preferably 90% by mass or less, further preferably 85% by mass or less. If the content percentage of ethylene monomer unit is within a predetermined range, porous structures can be formed more effectively.

For the ethylene series copolymers, those with MFR (JIS K721 0; temperature: 190°C; load: 2.16 kg) of 0.1 g/10 minutes or greater but 10 g/10 minutes or lower are used suitably. If the MFR is 0.1 g/10 minutes or greater, extrusion processability can be maintained satisfactorily, while if MFR is 10 g/10 minutes or lower, a reduction in the strength of the film is unlikely to occur, and thus is desirable.

As the ethylene series copolymers, for instance, "EVAFLEX" (manufactured by Du Pont-Mitsui Polychemicals Co., Ltd.) and "NOVATEC EVA" (manufactured by Japan polyethylene Corporation) as ethylene-vinyl acetate copolymers, "NUC co-polymer" (manufactured by Nippon Unicar Company Limited), EVAFLEX-EAA (manufactured by Du Pont-Mitsui Polychemicals Co., Ltd.) and "REXPEARL EAA" (manufactured by Japan ethylene Corporation) as ethylene-acrylic acid copolymers, "ELVALOY" (manufactured by Du Pont-Mitsui Polychemicals Co., Ltd.) and "REXPEARL EMA" (manufactured by Japan ethylene Corporation) as ethylene-(meth)acrylic acid copolymers, "REXPEARL EEA" (manufactured by Japan ethylene Corporation) as ethylene-ethyl acrylate copolymer, "ACRYFT" (manufactured by Sumitomo Chemical Co., Ltd.) as ethylene-methyl (meth)acrylate copolymer, "BONDINE" (manufactured by Sumitomo Chemical Co., Ltd.) as ethylene-vinyl acetate-maleic anhydride terpolymer, "BONDFIRST" (manufactured by Sumitomo Chemical Co., Ltd.) as ethylene-glycidyl methacrylate copolymer, ethylene-vinyl acetate-glycidyl methacrylate terpolymer and ethylene-ethyl acrylate-glycidyl methacrylate terpolymer, and the like, can be cited as those that can be acquired commercially.

In the above descriptions, waxes indicated as porositization-promoting compound examples refer to organic compounds that fulfill the properties (i) and (ii) below:

(i) The melting point is 40°C to 200°C.
(ii) The molten viscosity at a temperature that is 10°C higher than the melting point is 50 Pa·s or lower.

Waxes here are meant to include polar or nonpolar waxes, polypropylene waxes, polyethylene waxes and wax modifiers. Concretely, polar waxes, nonpolar waxes, Fischer-Tropsch waxes, oxidized Fischer-Tropsch waxes, hydroxystearamide waxes, functionalized waxes, polypropylene waxes, polyethylene waxes, wax modifiers, amorphous waxes, carnauba waxes, castor oil waxes, microcrystalline waxes, beeswax, castor waxes, vegetable waxes, candelilla waxes, Japanese waxes, ouricury waxes, Douglas fir bark waxes, rice bran waxes, jojoba waxes, bayberry waxes, montan waxes, ozokerite waxes, ceresin waxes, petroleum waxes, paraffin waxes, chemically modified hydrocarbon waxes, substitutional amide waxes, and combinations and derivatives thereof may be cited. Among them from the point of allowing porous structures to be formed effectively, paraffin waxes, polyethylene waxes and microcrystalline waxes are desirable, and from the point of view of SD characteristics, microcrystalline waxes, which allow the pore size to be further miniaturized are further desirable.

"FT-115" (manufactured by Nippon Seiro Co., Ltd.) as commercially available polyethylene waxes, and "Hi-Mic" (manufactured by Nippon Seiro Co., Ltd.) as microcrystalline waxes, and the like, may be cited.

For the mixing amount of the porositization-promoting compound, 1 part by mass or greater is desirable, in particular 5 parts by mass or greater is all the more desirable, and 10 parts by mass or greater is further desirable, with respect to 100 parts by mass of polyethylene series resin contained in one layer, when micropores are formed by detaching the interface between polyethylene series resin and the porositization-promoting compound. Meanwhile, as the upper limit, 50 parts by mass or less is desirable, in particular 40 parts by mass or less is all the more desirable, and 30 parts by mass or less is further desirable. If the mixing amount of the porositization-promoting compound with respect to 100 parts by mass of polyethylene series resin is 1 part by mass or greater, the aimed effects manifested by a satisfactory porous structure are sufficiently obtained. In addition, if the mixing amount of the porositization-promoting compound is 50 parts by mass or less, more stabilized moldability can be secured.

(Other constituents)

As necessary, aside from polyethylene series resins and porositization-promoting compounds, compounds called rubber constituents such as thermoplastic resin and thermoplastic elastomer may be added to extents that are not detrimental to the thermal properties, concretely, porositization, of the porous film.

In addition, an additive generally mixed into a resin composition, or another constituent may be contained.

As the additives mentioned above, additives that are added for the purpose of improving/adjusting forming processability, productivity and other various physical properties may be cited, such as, recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants.

Among them, nucleating agents are desirable, as they have the effects of controlling the crystal structure of the polyethylene series resin, refining the porous structure at the time of pore-opening by stretching.

<Production method for the present porous film>

In the following, production methods for the present porous film will be described. However, the production methods for the present porous film are not limited to the methods described in the following.

The production method for the pore-free film-shaped object can use well-known methods, without being limited in particular. For instance, a method may be cited, whereby, using an extruder, a thermoplastic resin composition is melted, extruded from a T-die and solidified by cooling with a cast rolls. In addition, a method can be also applied, whereby a film-shaped object produced by a tubular method is cut open and planarized.

Regarding stretching methods for the pore-free film-shaped object, there are techniques such as roll drawing method, rolling method, tenter stretching method and simultaneous biaxial stretching method, and it suffices to carry out uniaxial stretching or biaxial stretching with these, alone or by combining two or more. Among these, from the point of view of porous structure control, adopting successive biaxial stretching is desirable.

In addition, when turning the present porous film into a laminate, the production methods are divided roughly into the following four types according to the sequence of porositization and layering:

(a) Methods whereby, after each layer has been porositized, the porositized each layer is layered by being laminated or adhered with an adhesive or the like.
(b) Methods whereby each layer is layered to fabricate a layered pore-free film-shaped object, and then, the pore-free film-shaped object is porositized.

(c) Methods whereby any one layer among each of the layers is porositized, then, layered with another layer of pore-free film-shaped object, and porositized.
(d) Methods whereby a porous layer is fabricated and then, application of a coating of inorganic/organic particle or the like, vapor deposition of metal particle, or the like, is carried out for layering.

In the production of the present porous film, from the points of view of simplicity and productivity of the process thereof, using the methods of (b) is desirable, and above all, in order to secure the inter-layer adhesive property of two layers, the methods whereby a layered pore-free film-shaped object is fabricated by co-extrusion and then porositized is particularly desirable.

Hereafter, the production methods will be described in detail.
First, a mixed resin composition of polypropylene series resin, if necessary thermoplastic resin, and additive is prepared. For instance, source materials such as polypropylene series resin, β-crystal nucleating agent, and other additives as desired are mixed preferably using a Henschel mixer, a super mixer, a tumbler-type mixer or the like, or by placing all the constituents in to a bag and hand-blending, then, melt-kneaded with a single screw or a twin screw extruder, a kneader or the like, preferably a twin screw extruder, and then cut to obtain a pellet.

The pellet is introduced into an extruder, and extruded from a T-die extrusion mouth to mold a film-shaped object. The type of T-die is not limited in particular. For instance, when the present porous film adopts a layered structure of two species and three layers, it does not matter that the T-die is a multi-manifold type for two species and three layers, or that it is a feed block-type for two species and three layers.

While the T-die gap to be used is determined by the thickness of the film ultimately needed, the stretching conditions, the draft rate, various conditions and the like, it is in general on the order of 0.1 to 3.0 mm, and preferably 0.5 to 1.0 mm. At less than 0.1 mm, it is not desirable from the point of view production speed, and in addition, if greater than 3.0 mm, it is not desirable from the point of view of production stability as the draft rate becomes greater.

In the extrusion-molding, the extrusion process temperature is adjusted suitably according to the flowing properties, molding ability and the like of the resin composition. Roughly 180 to 350°C is desirable, 200 to 330°C is more desirable, and 220 to 300°C is further desirable. If 180°C or higher, it is desirable from the fact that the viscosity of the molten resin being sufficiently low, molding ability is excellent and productivity increases. Meanwhile, by being at 350°C or lower, degradation of the resin composition and consequently a decrease in the mechanical strength of the obtained polypropylene series resin porous film can be suppressed.

The cooling-solidification temperature of the cast rolls is preferably 80 to 150°C, more preferably 90 to 145°C, and even more preferably 100 to 130°C. By being in the defined temperature range, such trouble as the extruded molten resin adheres and winds onto the cast roll is unlikely to occur, allowing the resin to be turned into a film-shaped object efficiently, which is desirable. In addition, in a film-shaped object having β-crystal activity, as the ratio of β-crystals can be increased sufficiently, allowing sufficient porosity to be obtained, being in this range is desirable.

It is desirable that the β-crystal ratio in the polypropylene series resin of the film-shaped object prior to stretching is adjusted to 30 to 100% by setting the cast rolls to the temperature range described above. More desirable is 40 to 100%, further desirable is 50 to 100%, and most desirable is 60 to 100%. By having the ratio of β-crystals in the film-shaped object prior to stretching at 30% or greater, porositization is facilitated in the subsequent stretching operation, allowing a polypropylene series resin porous film having adequate air-permeating properties to be obtained.

The β-crystal ratio in the film-shaped object prior to stretching is calculated by the formula below, using the crystalline melting heat derived from the α-crystals ($\Delta Hm\alpha$) and the crystalline melting heat derived from the β-crystals ($\Delta Hm\beta$) of the polypropylene series resin (A) that are detected when the film-shaped object is raised in temperature from 25°C to 240°C at a heating rate of 10°C/minute using a differential scanning calorimeter.

$$\beta\text{-crystal ratio (\%)} = [\Delta Hm\beta/(\Delta Hm\beta+\Delta Hm\alpha)] \times 100$$

In the stretching process, uniaxially stretching in the longitudinal direction or the transversal direction is adequate, and biaxially stretching is also adequate. In addition, when carrying out biaxial stretching, simultaneous biaxial stretching is adequate, and successive biaxial stretching is also adequate.
When fabricating the present porous film, successive biaxial stretching, which allows the stretching conditions to be selected at each stretching process, and in which controlling the porous structure is facilitated, is more desirable.

Next, at least biaxially stretching the obtained pore-free film-shaped object is more desirable. While biaxial stretching may be simultaneous biaxial stretching or may be successive biaxial stretching, successive biaxial stretching, which allows the stretching conditions (ratio and temperature) to be selected at each stretching process simply, in which controlling the porous structure is facilitated, is more desirable.

The longer direction of film-shaped object and film is termed "longitudinal", and the perpendicular direction with respect to the longer direction is termed "transversal". In addition, stretching in the longer direction is termed "longitudinal stretching", and stretching in the perpendicular direction with respect to the longer direction is termed "transversal stretching".

When successive biaxial stretching is used, it is desirable to change the stretching temperature and the like at suitable moments according to the composition, the crystal-melting peak temperature, the degree of crystallinity, and the like, of the resin composition to be used.

For the stretching temperature in longitudinal stretching, roughly 0 to 160°C is desirable, 10 to 155°C is more desirable, and 20 to 150°C is further desirable.

Regarding the longitudinal stretch ratio, 1.2-fold or greater is desirable, 1.5-fold or greater is more desirable, and 1.8-fold or greater is further desirable, for the lower limit. Meanwhile, 10-fold or less is desirable, 8-fold or less is more desirable, and 7-fold or less is further desirable, for the upper limit. Carrying out longitudinal stretching within the ranges described above allows a suitable degree of void origins to manifest while rupture during stretching is suppressed.

For the stretching temperature in transversal stretching, roughly 80 to 160°C is desirable, 85 to 155°C is more desirable, and 90 to 150°C is further desirable. Regarding the transversal stretch ratio, 1.2-fold or greater is desirable, 1.5-fold or greater is more desirable, and 1.8-fold or greater is further desirable, for the lower limit. Meanwhile, 10-fold or less is desirable, 8-fold or less is more desirable and 7-fold or less is further desirable, for the upper limit. Carrying out transversal stretching within the ranges described above allows the hole origins formed by longitudinal stretching to be enlarged to a suitable degree and a fine porous structure to manifest.

The stretch ratio is largely related to the shapes of the pore. The aspect ratio of the pore size is correlated to the ratio between the longitudinal stretch ratio and the transversal stretch ratio. If stretching is isotropic, the pores of the porous film also become isotropic.

Here, regarding the ratio MD/TD between the longitudinal stretch ratio and the transversal stretch ratio, as the upper limit, 3.0 or less is desirable, 2.5 or less is more desirable and 2.2 or less is further desirable. Meanwhile, as the lower limit, there is no particular limitation. For instance, 0.8 or greater is desirable, and 1.0 or greater is more desirable. By biaxially stretching within the range described above, hole deformation due to elongation is suppressed sufficiently, which is thus desirable.

As the stretching speed of the stretching process, 500 to 12,000%/minute is desirable, 1,500 to 10,000%/minute is further desirable, and 2,500 to 8,000%/minute is further desirable.

It is desirable to perform a heat-treatment on the present porous film obtained in this manner, with the purpose of improving dimensional stability.

In so doing, by having the heat-treatment temperature at preferably 100°C or higher, more preferably 110°C or higher, and even more preferably 120°C or higher, it is possible to anticipate an effect that elevates dimensional stability. Meanwhile, the heat-treatment temperature is preferably 170°C or lower, more preferably 165°C or lower, and even more preferably 160°C or lower. If the heat-treatment temperature is 170°C or lower, melting of the polypropylene series resin by the heat-treatment is unlikely to occur, allowing the porous structure to be maintained, which is thus desirable.

In addition, during the heat-treatment process, a 1 to 20% relaxation treatment may be performed as necessary.

After the heat-treatment, the present porous film is obtained by uniformly cooling and winding.

<Application of the present porous film>

Next, an example in which the present porous film is used as a battery separator to constitute a battery will be described as an example of application of the present porous film.

(Battery)

A non-aqueous electrolytic solution battery containing the present porous film as a battery separator will be described while referring to Fig. 1.

Two poles, a positive electrode plate 21 and a negative electrode plate 22, are wound into a spiral-shape so as to overlap one another through a battery separator 10, and turned into a wound body by holding the outside with a roll-holding tape.

Here, the winding process will be described in detail. One of the ends of the battery separator is passed through a slit portion 1 of a pin (Fig. 2), and the pin is turned only slightly so as to have one end of the battery separator wound onto the pin. In so doing, the surface of the pin and the heat-resistant layer of the battery separator are in contact. Thereafter, the positive electrode and the negative electrode are disposed so as to sandwich the battery separator in between, and the pin is rotated with a winding machine to wind the positive and negative electrodes and the battery separator. After winding, the pin is pulled out from the wound object.

The wound body comprising the positive electrode plate 21, the battery separator 10 and the negative electrode plate 22 that have been wound integrally, is included inside a bottomed cylindrical battery case and welded to lead bodies 24, 25 of the positive electrode and the negative electrode. Next, electrolytes are injected into the battery can, after the electrolytes have impregnated sufficiently the battery separator 10 and the like, a positive electrode lid 27 is sealed through a gasket 26 around the battery can opening, pre-charging and aging are carried out to fabricate a cylindrical non-aqueous electrolytic solution battery.

An electrolytic solution which a lithium salt has been dissolved in an organic solvent can be used.

As organic solvent, there is no particular limitation. For instance, esters such as propylene carbonate, ethylene carbonate, butylene carbonate, γ-butyrolactone, γ-valerolactone, dimethyl carbonate, methyl propionate or butyl acetate, nitriles such as acetonitrile, ethers such as 1,2-dimethoxy ethane, 1,2-dimethoxy methane, dimethoxy propane, 1,3-dioxolane, tetrahydrofuran, 2-methyl tetrahydrofuran or 4-methyl-1,3-dioxolane, or sulfolane and the like may be cited, and these can be used alone or by mixing two species or more.

Among them, an electrolyte in which a lithium hexafluorophosphate ($LiPF_6$) has been dissolved at a proportion of 1.0 mol/L in a solvent comprising 2 parts by mass of methylethyl carbonate mixed with respect to 1 part by mass of ethylene carbonate, is desirable.

As negative electrode, alkaline metal or a compound containing alkaline metal integrated with a power collection material such as a stainless steel mesh can be used.

As the alkaline metal, for instance lithium, sodium or potassium, and the like, can be used.

As the compound containing alkaline metal, for instance, an alloy between an alkaline metal and aluminum, lead, indium, potassium, cadmium, tin, magnesium or the like, furthermore, a compound between an alkaline metal and a carbon material, a compound between a low potential alkaline metal and a metal oxide or sulfide, and the like, can be used.

When using a carbon material in the negative electrode, as carbon material, one that allows lithium ion doping and dedoping is adequate. For instance graphite, pyrolytic carbons, cokes, glassy carbons, burned bodies of organic macromolecular compounds, mesocarbon micro beads, carbon fibers, activated charcoal and the like can be used.

As a concrete example of negative electrode, for instance, a carbon material with an average particle size of 10 μm mixed to a solution comprising vinylidene fluoride dissolved in N-methyl pyrrolidone turned into a slurry, this negative electrode mixture slurry having been passed through a 70-mesh net to remove large particles, then, uniformly coated and dried on both sides of a negative electrode power collector consisting of an 18 μm-thick strip of copper foil, thereafter, compression molded with a roll press and then cut into a strip of negative electrode plate, can be used.

Meanwhile, as positive electrode, a metal oxide such as lithium cobalt oxide, lithium nickel oxide, lithium manganese oxide, manganese dioxide, vanadium pentoxide or chromium oxide, metal sulfide such as molybdenum disulfide, and the like, can be used as active materials. Then, a mixture comprising a conducting material and a binding agent or the like such as polytetrafluoroethylene suitably added to these positive electrode active materials, which has been finished as a molded body with a power collection material such as stainless steel mesh as a core, can be used.

As a concrete example of positive electrode, for instance, flake graphite is added as conducting material and mixed with lithium cobalt oxide ($LiCoO_2$) at a mass ratio (lithium cobalt oxide:flake graphite) of 90:5, this mixture and a solution comprising polyvinylidene fluoride dissolved in N-methyl pyrrolidone are mixed to be turned into a slurry. This positive electrode mixture slurry can be passed through a 70-mesh net to remove large particles, then, uniformly coated and dried on both sides of a positive electrode power collector consisting of a 20 μm-thick aluminum foil, thereafter, compression molded with a roll press and then cut into a strip of positive electrode plate.

<Explanation of terms>

In the present invention, when the expression "main component" is used, unless expressly mentioned, it includes the meaning of allowing other constituents to be contained to an extent that does not impede the functions of the main component, and while this does not specify in particular the proportion of the main component contained, it includes the meaning that the main component occupies 50% by mass or greater within the composition, preferably 70% by mass or greater, and particularly preferably 90% by mass or greater (including 100%).

When the statement "X to Y" (X and Y are any numbers) is used, unless expressly stated otherwise, along with the meaning "X or greater but Y or lower", the meanings "preferably larger than X" and "preferably smaller than Y" are included.

In addition, also when the statement "X or greater" or "Y or less" (X and Y are any numbers) is used, unless expressly stated otherwise, the meanings "preferably larger than X" and "preferably smaller than Y" are included.

[Examples]

Hereafter, the porous film of the present invention will be described in further detail by indicating examples and comparative examples. The present invention is not to be limited to these. The longer direction of the layered porous film is termed "longitudinal" and the direction perpendicular to the longer direction is termed "transversal".

(1) Film thickness

Thickness was measured at 30 locations non-specifically in the film (sample) plane with a 1/1,000 mm dial gauge, and the mean value thereof served as the film thickness.

(2) Porosity

The actual mass $W_1$ of the porous film (sample) was measured, the mass $W_0$ at 0% porosity was calculated from the density and the thickness of the resin composition, and from these values, porosity was calculated based on the following formula:

$$\text{Porosity (\%)} = \{(W_0 - W_1)/W_0\} \times 100$$

(3) Modulus of elasticity in tension

A tension and compression testing machine (manufactured by Intesco Co., Ltd.; Model 200X) was used to measure the modulus of elasticity in tension.
A porous film (sample) cut out at a length of 200 mm in MD and at a width of 5mm in TD was used as a test piece. The test piece was pulled under conditions of 150 mm inter-chuck distance and 5 mm/min crosshead speed, the load applied on the load cell when the chuck spacing has extended 3% was measured and the modulus of elasticity in tension was determined from the formula below. The thickness of the porous film was determined from mean values measured at three locations.

$$\text{Modulus of elasticity in tension (MPa)} = \{\text{load (kg)} \times 9.8 \ (m/s^2)/\text{extended}$$

$$\text{distance (mm)}\}/\text{cross section } (mm^2) \times \text{inter-chuck distance (mm)}$$

The mean value of moduli of elasticity in tension measured at 5 points served as the modulus of elasticity in tension.

(4) Air-permeability

Air-permeability (seconds/100 ml) of the porous film (sample) was measured according to JIS P8117.

(5) Air-permeability at 5% elongation

One of the ends of a porous film 42 cut out to 60 mm in width and 300 mm in length was wound around and attached with a tape to a square aluminum frame 41 of 200 mm per side, 10 mm in width and 1.8 mm in thickness, and a reference line 43 of 150 mm in length was drawn on the porous film 42 present on the inner portion of the aluminum frame 41, as in Fig. 2 (A). In a state where the other end was attached with a tape and wound around a metal plate 44 of 170 mm in length and 15 mm in width, the porous film 42 was stretched in one direction, and at the time point where the elongation ratio of the porous film 42 reached 5%, the aluminum frame 41 and the metal plate 44 were immobilized while still in a stretched state, as in Fig. 2 (B), and air-permeability of the porous film on the inner portion of the aluminum frame 41 was measured, whereby the air-permeability at 5% elongation was measured.
The elongation ratio was calculated from the length of the reference line.

(6) Differential scanning type calorimetric (DSC)

For the porous film (sample), the temperature was raised from 25°C to 240°C at a scanning speed of 10°C/minute then retained for one minute, next, the temperature was lowered to 240°C to 25°C at a scanning speed of 10°C/minute then retained for one minute, next, the temperature was raised again from 25°C to 240°C at a scanning speed of 10°C/minute, using a differential scanning calorimeter (DSC-7) manufactured by Perkin-Elmer.

According to whether or not a peak was detected at 145 to 160°C, which is the crystal-melting peak temperature (Tmβ) derived from a β-crystal of the polypropylene series resin, during this re-rise in temperature, the presence or absence of β activity was assessed and evaluated with the following criteria:
"o(circle)": if Tmβ was detected within the range of 145°C to 160°C (presence of β-crystal activity)

"x(cross)": if Tmβ was not detected within the range of 145°C to 160°C (no β-crystal activity)

Measurement of the β activity was carried out with a sample amount of 10 mg under nitrogen atmosphere.

(7) Wide-angle X-ray diffraction measurement (XRD)

A porous film (sample) was cut out into a square of 60 mm vertically and 60 mm horizontally, and sandwiched between two aluminum plates (material: JIS A5052; size: 60 mm vertical, 60 mm horizontal; thickness: 1 mm) which center had a hole open in the shape of a 40 mmØ circle as shown in Fig. 3 (A), and the periphery was secured with clips as shown in Fig. 3 (B).

The porous film (sample) in a constrained state by two aluminum plates was introduced into a programmable mechanical convection oven (manufactured by Yamato Scientific Co., Ltd., Model: DKN602) at a setting temperature of 180°C and a display temperature of 180°C, retained for three minutes, then, the setting temperature was changed to 100°C, and slow cooling was carried out to 100°C over 10 minutes or longer time. At the time point where the display temperature became 100°C, the porous film was taken out, and for the porous film obtained by cooling under 25°C atmosphere for 5 minutes still in a constrained stated by two aluminum plates, wide-angle X-ray diffraction measurement was carried out for the central 40 mmØ circular portion, with the following measurement conditions:
Wide-angle X-ray diffractometer: manufactured by Mac Science; Model No.: XMP18A
X-ray source: CuKα beam; output: 40kV, 200mA
·Scanning method: 2θ/θ scan, 2θ range: 5° to 25°; scanning interval: 0.05°; scanning speed: 5°/min

For the obtained diffraction profile, the presence or absence of β-crystal activity was evaluated from the peak derived from the (300) plane of a β-crystal of the polypropylene series resin, as follows:
"o(circle)": if a peak was detected in a range of 2θ = 16.0 to 16.5° (presence of β-crystal activity)
"x(cross)": if a peak was not detected in a range of 2θ = 16.0 to 16.5° (no β-crystal activity)

If the porous film piece cannot be cut out into a square of 60 mm vertically and 60 mm horizontally, adjustments may be made so that the porous film is placed in the center in the 40 mmØ circular hole to prepare the sample.

(10) Overall evaluation

Regarding air-permeability (Pa) prior to elongation and air-permeability (Pa') at 5% elongation, evaluation was carried out as follows:

"◎(double circle)": Pa' is 800 seconds/100 ml or less and Pa'/Pa is 1.3 or less

"o(circle)": Pa' is 1,000 seconds/100 ml or less and Pa'/Pa is greater than 1.3 but 1.5 or less

"×(cross)": Pa' is larger than 1,000 seconds/100 ml, or Pa'/Pa is larger than 1.5

[Example 1]

With respect to 100 parts by mass of polypropylene series resin (manufactured by Prime Polymer Co., Ltd., Prime Polypro F300SV; MFR: 3g/10 minutes), 0.2 parts by weight of oxidation inhibitor (manufactured by Ciba Specialty Chemicals Corporation; IRGANOX B225), and 0.2 parts by mass of 3,9- bis[4-(N-cyclohexyl carbamoyl)phenyl]-2,4,8,10-tetraoxaspiro[5.5]undecane as β-crystal nucleating agent were added, melt-kneaded at 270°C and extruded from a strand die using a co-rotating twin screw extruder (port diameter: 40 mmØ; UD = 32) manufactured by Toshiba Machine Co., Ltd, then, the strand was cooled in water at 30°C and pelletized with a cutter to obtain a resin composition A1.

The resin composition A1 was extruded at 200°C and solidified by cooling with cast rolls at 126°C to fabricate a pore-free film-shaped object.

The pore-free film-shaped object was successively biaxially stretched, 4-fold longitudinally at 110°C followed by 2.0-fold transversally at 145°C, and then relaxed 6% transversally at 145°C to obtain a polypropylene series resin porous film (sample).

Measurements and evaluations of various properties of the obtained polypropylene series resin porous film (sample) were carried out, which results are compiled in Table 1.

[Example 2]

Separately from the resin composition A1, 20 parts by mass of microcrystalline wax (manufactured by Nippon Seiro Co., Ltd., Hi-Mic1090), and 0.2 parts by weight of dibenzylidene sorbitol (manufactured by New Japan Chemical Co., Ltd.; Gelol D) as nucleating agent were added to 80 parts by mass of high density polyethylene (manufactured by Prime Polymer Co., Ltd.; Hi-ZEX3300F; density: 0.950 g/cm$^3$, MFR: 1.1 g/10 minutes) as polyethylene series resin, melt-kneaded at 230°C and extruded from a strand die using the same model of co-rotating twin screw extruder then, the strand was cooled in water at 30°C and pelletized with a cutter to obtain a resin composition B1.

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 3.5/1/3.5, and then solidified by cooling with cast rolls at 127°C to fabricate a layered pore-free film-shaped object.

The layered pore-free film-shaped object was successively biaxially stretched, 4.6-fold longitudinally at 120°C followed by 2.0-fold transversally at 100°C, and then relaxed 6% transversally at 125°C to fabricate a layered porous film (sample).

Measurements and evaluations of various properties of the obtained polypropylene series resin porous film (sample) and wound object were carried out, which results are compiled in Table 1.

[Example 3]

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 3.5/1/3.5, and then solidified by cooling with cast rolls at 125°C to fabricate a layered pore-free film-shaped object.

The layered pore-free film-shaped object was successively biaxially stretched, 4.0-fold longitudinally at 120°C followed by 2.0-fold transversally at 98°C, and then relaxed 6% transversally at 115°C to obtain a layered porous film (sample).

Measurements and evaluations of various properties of the obtained layered porous film (sample) were carried out, which results are compiled in Table 1.

[Example 4]

The resin composition A1 was extruded at 200°C and solidified by cooling with cast rolls at 127°C to fabricate a pore-free film-shaped object.

The pore-free film-shaped object was successively biaxially stretched, 4-fold longitudinally at 120°C followed by 4.0-fold transversally at 145°C, and then relaxed 6% transversally at 145°C to obtain a polypropylene series resin porous film (sample).

Measurements and evaluations of various properties of the obtained polypropylene series resin porous film (sample) were carried out, which results are compiled in Table 1.

[Example 5]

The resin composition A1 was extruded at 200°C and solidified by cooling with cast rolls at 127°C to fabricate a pore-free film-shaped object.

The pore-free film-shaped object was successively biaxially stretched, 3-fold longitudinally at 120°C followed by 2.0-fold transversally at 145°C, and then relaxed 6% transversally at 145°C to obtain a polypropylene series resin porous film (sample).

Measurements and evaluations of various properties of the obtained polypropylene series resin porous film (sample) were carried out, which results are compiled in Table 1.

[Comparative Example 1]

The resin composition A1 was extruded at 200°C and solidified by cooling with cast rolls at 127°C to fabricate a pore-free film-shaped object.

The pore-free film-shaped object was successively biaxially stretched, 7-fold longitudinally at 120°C followed by 2.0-fold transversally at 145°C, and then relaxed 6% transversally at 145°C to obtain a polypropylene series resin porous film (sample).

Measurements and evaluations of various properties of the obtained polypropylene series resin porous film (sample) were carried out, which results are compiled in Table 1.

[Comparative Example 2]

The resin composition A1 was extruded at 200°C and solidified by cooling with cast rolls at 126°C to fabricate a pore-free film-shaped object.

The pore-free film-shaped object was successively biaxially stretched, 6.3-fold longitudinally at 120°C followed by 2.0-fold transversally at 145°C, and then relaxed 6% transversally at 145°C to obtain a polypropylene series resin porous film (sample).

Measurements and evaluations of various properties of the obtained polypropylene series resin porous film (sample) were carried out, which results are compiled in Table 1.

[Table 1]

| | | Example 1 | Example 2 | Example 3 | Example 4 | Example 5 | Comparative Example 1 | Comparative Example 2 | |
|---|---|---|---|---|---|---|---|---|---|
| Film thickness | μm | 20 | 20 | 20 | 25 | 25 | 26 | 15 | |
| Porosity | & | 53 | 46 | 55 | 55 | 55 | 45 | 70 | |
| Air-permeability Pa | sec/1 00 ml | 265 | 427 | 553 | 394 | 578 | 222 | 336 | |
| Air-permeability Pa' | sec/100 ml | 345 | 576 | 636 | 370 | 566 | 335 | 589 | |
| Pa'/Pa | | - | 1.30 | 1.35 | 1.15 | 0.94 | 0.98 | 1.51 | 1.75 |
| Modulus of elasticity in tension | MPa | 670 | 540 | 640 | 450 | 390 | 790 | 720 | |
| β-crystal activity | DSC | - | ○ | ○ | ○ | ○ | ○ | ○ | ○ |
| | XRD | - | ○ | ○ | ○ | ○ | ○ | ○ | ○ |
| Overall evaluation | | - | ◎ | ○ | ◎ | ◎ | ◎ | × | × |

The physical property values obtained in each of the examples and comparative examples are shown in Table 1. It is confirmed that hole deformation due to elongation is suppressed if the polypropylene series resin porous films obtained in Examples 1 to 5 have Pa' of 1,000 seconds/100 ml or less and Pa'/Pa of 1.5 or less. Thus, when using the film as a battery separator, the battery separator can retain continuity even if electrodes and battery separators are wound. Meanwhile, from the results of Comparative Examples 1 and 2, hole deformation due to elongation was found to occur when the longitudinal stretch ratio is large and the holes are anisotropic. Thus, when using the film as a battery separator, elongation due to winding deteriorates continuity in the battery separator upon winding electrodes and battery separators. Among the examples, Example 1 is the more desirable mode from the point of view of air-permeability.

[Description of the numerals to the drawings]

| | |
|---|---|
| 10 | battery separator |
| 20 | secondary battery |
| 21 | positive electrode plate |
| 22 | negative electrode plate |
| 24 | positive electrode lead body |
| 25 | negative electrode lead body |
| 26 | gasket |
| 27 | positive electrode lid |
| 31 | aluminum plate |
| 32 | film |
| 33 | clip |
| 34 | film longitudinal direction |
| 35 | film transversal direction |
| 41 | aluminum frame |
| 42 | porous film |
| 43 | reference line |
| 44 | metal plate |

**Claims**

1. A polypropylene series resin porous film fulfilling the following conditions (1) and (2) regarding air-permeability (Pa) prior to elongation and air-permeability (Pa') at 5% elongation:

   (1) Pa' is 1,000 seconds/100 ml or less
   (2) Pa'/Pa is 1.5 or less

2. The polypropylene series resin porous film according to claim 1, having β-crystal activity.

3. A battery separator comprising the polypropylene series resin porous film according to claim 1 or 2.

4. A non-aqueous electrolytic solution battery, wherein the battery separator according to claim 3 is housed therein.

[Fig.1]

[Fig.2]

[Fig.3]

( A )

( B )

<table>
<tr><td colspan="2" align="center"><b>INTERNATIONAL SEARCH REPORT</b></td><td colspan="2">International application No.<br>PCT/JP2011/056004</td></tr>
</table>

**A. CLASSIFICATION OF SUBJECT MATTER**
*H01M2/16*(2006.01)i, *C08J9/00*(2006.01)i, *H01M10/0566*(2010.01)i

According to International Patent Classification (IPC) or to both national classification and IPC

**B. FIELDS SEARCHED**

Minimum documentation searched (classification system followed by classification symbols)
H01M2/16, C08J9/00, H01M10/0566

Documentation searched other than minimum documentation to the extent that such documents are included in the fields searched
Jitsuyo Shinan Koho            1922–1996    Jitsuyo Shinan Toroku Koho    1996–2011
Kokai Jitsuyo Shinan Koho    1971–2011    Toroku Jitsuyo Shinan Koho    1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-171230 A  (Toray Industries, Inc.), 30 June 2005 (30.06.2005), claims; paragraphs [0001], [0069], [0084]; table 2 (Family: none) | 1–4 |
| X | JP 2009-227819 A  (Toray Industries, Inc.), 08 October 2009 (08.10.2009), claims; paragraphs [0032], [0069] to [0072]; table 2 (Family: none) | 1–4 |
| X | JP 2006-89727 A  (New Japan Chemical Co., Ltd.), 06 April 2006 (06.04.2006), claims; paragraphs [0144] to [0176] (Family: none) | 1–4 |

☒ Further documents are listed in the continuation of Box C.　　☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>15 June, 2011 (15.06.11) | Date of mailing of the international search report<br>28 June, 2011 (28.06.11) |
|---|---|
| Name and mailing address of the ISA/<br>　Japanese Patent Office<br><br>Facsimile No. | Authorized officer<br><br><br>Telephone No. |

Form PCT/ISA/210 (second sheet) (July 2009)

21

**INTERNATIONAL SEARCH REPORT**

International application No.

PCT/JP2011/056004

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2008-201814 A (Toray Industries, Inc.), 04 September 2008 (04.09.2008), claims; paragraphs [0034] to [0066] (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008248231 A
- JP 2000030683 A
- JP 3739481 B
- JP H04181651 B

- JP 2003306585 A
- JP H06289566 B
- JP H09194650 B

**Non-patent literature cited in the description**

- *Macromol. Chem.,* 1986, vol. 187, 643-652
- *Prog. Polym. Sci.,* 1991, vol. 16, 361-404
- *Macromol. Symp.,* 1995, vol. 89, 499-511

- *Macromol. Chem.,* 1964, vol. 75, 134
- **A. ZAMBELLI et al.** *Macromolecules,* 1975, vol. 8, 687